# EUROPEAN PATENT APPLICATION

(11) **EP 2 101 477 A1**
(43) Date of publication of application: **16.09.2009**
(21) Application number: 06840832.7
(22) Date of filing: 31.12.2006
(51) Int. Cl.: H04L 29/10

(54) **A DIRECTORY SERVICE APPARATUS AND THE METHOD THEREOF**

(30) Priority: 12.12.2006 WO PCT/CN2006/003375
(71) Applicant: ZTE Corporation, Shenzhen, Guangdong 518057 (CN)
(72) Inventor: SUN, Desheng, Shenzhen Guangdong Province 518057 (CN)
(74) Representative: Bongiovanni, Simone
(86) International application number: PCT/CN2006/003802
(87) International publication number: WO 2008/071042

(57) **Abstract**

The present invention provides an apparatus and method for directory services. The apparatus comprises at least one of the following interfaces: directory services request interface for receiving directory services requests from other apparatus for directory services and generating a response; information configuration interface for interacting information with outside and perfecting an address mapping list; and peer coordination interface, comprising input part and output part, for exchanging information with other apparatus for directory services and perfecting the address mapping list. Hence, the functions of processing directory services requests, maintaining and synchronizing directory services information are achieved.

## Description

### Technical Field

The present invention relates to the field of optical network, more specifically to an apparatus and method for directory service in automatic switched optical network.

### Background of the Invention

Optical network technique has been deployed widely in the field of telecommunication, such as optical transmission network (hereinafter called OTN), wavelength-division multiplexing (hereinafter called WDM), synchronous digital hierarchy (hereinafter called SDH) or synchronous optical network (hereinafter called SONET).

In recent years, automatic switched optical network (hereinafter called ASON) has become a research hotspot in the field of optical network. The concept of ASON is put forward by ITU-T G.8080 suggestion, wherein functions of ASON are achieved by setting a special control plane (hereinafter called CP). It is described in G.8080 that directory services need to be queried after a call controller (hereinafter called CallC) receiving a call request of the user side and then initiates a connection request to connection controller (hereinafter called CC) or in other cases when address analysis is required.

The main function of the directory service is to transform identifiers between or within name spaces, comprising: (1) returning subnet point pool (hereinafter called SNPP, a name of transmission resource on the control plane) identification according to the transmission resource identification (hereinafter called TRI) of the user network interface (hereinafter called UNI); (2) returning the UNI transmission resource identification according to the alias of UNI transmission resource identification; (3) returning the UNI transmission resource identification according to the SNPP identification; (4) returning the SNPP identification according to SNPP alias.

However, technical problems such as how to provide directory services, how to maintain directory services are not included in the ASON technical standard associated with ITU-T issued at present.

### Summary of the invention

In order to solve the problems of providing and maintaining directory services in ASON, the present invention provides an apparatus and method for directory service, wherein the request services of directory services are provided to other components of control plane in ASON and address information is maintained and synchronized over the interface itself so as to solve the above problems.

One aspect of the present invention provides an apparatus for directory service, including at least one of the following interfaces: directory services request interface for receiving directory services requests from other apparatus for directory service and giving a response; information configuration interface for receiving input information from outside and perfecting an address mapping list; and peer coordination interface comprising an input part and an output part for exchanging information with other apparatus for directory service and perfecting the address mapping list.

According to one aspect of the present invention, the information configuration interface includes two interfaces, i.e. a first information configuration interface and a second information configuration interface, for exchanging with upper layer and lower layer respectively.

According to one aspect of the present invention, the address mapping list stores transmission resource identification, transmission resource identification alias, SNPP identification and SNPP identification alias and records of corresponding the relationships among them.

According to another aspect of the present invention, there provides a method for directory services, comprising the following steps: detecting whether a directory services request from other apparatus for directory service exists; and searching an address mapping list according to the directory services request when a directory services request is detected; if an expected result is searched, returning the expected result to other apparatus for directory service, otherwise returning failure information.

According to another aspect of the present invention, the address mapping list stores transmission resource identification, transmission resource identification alias, SNPP identification and SNPP identification alias and records corresponding relationships among them.

According to another aspect of the present invention, the method for directory services further comprises the following steps: detecting from outside whether configuration information exists; and updating the address mapping list according to the configuration information when the configuration information is detected.

According to yet another aspect of the present invention, the method for directory services further comprises the following steps: detecting from outside whether a request for obtaining local configuration information exists; and returning a corresponding result according to the local configuration information when the request for obtaining local configuration information is detected.

In addition, according to the method for directory services of the present invention, further comprising the following steps: generating a peer coordination request according to the configuration information and transmitting the peer coordination request to other apparatus for directory service.

According to another aspect of the present invention, the method for directory services further comprises the following steps: detecting whether a peer coordination request from other apparatus for directory services exists; updating the address mapping list according to the peer coordination request when a peer coordination request is detected; and transmitting the peer coordination request to the other apparatus for directory services.

The step of updating the address mapping list of the present invention further comprises the step of updating the corresponding relationships among transmission resource identification, transmission resource identification alias, SNPP and SNPP alias.

According to yet another aspect of the present invention, there further provides a method for directory services, comprising the following steps: detecting from outside whether configuration information exists; and updating an address mapping list according to configuration information when the configuration information is detected.

According to yet another aspect of the present invention, the method for directory services further comprises the following steps: generating a peer coordination request according to the configuration information and transmitting the peer coordination request to other apparatus for directory service.

In addition, according to yet another aspect of the present invention, the method of directory services further comprises the following steps: detecting whether a peer coordination request from other apparatus for directory services exists; updating the address mapping list according to the peer coordination request when the peer coordination request is detected; and transmitting the peer coordination request to the other apparatus for directory services.

According to yet another aspect of the present invention, the step of updating the address mapping list further comprises the step of updating the corresponding relationships among transmission resource identification, transmission resource identification alias, SNPP and SNPP alias.

In addition, according to yet another aspect of the present invention, the address mapping list stores transmission resource identification, transmission resource identification alias, SNPP identification and SNPP identification alias and records corresponding relationships among them.

According to yet another aspect of the present invention, there provides a method of directory services, comprising the following steps: detecting whether a peer coordination request from other apparatus for directory services exists; updating the address mapping list according to the peer coordination request when a peer coordination request is detected; and transmitting the peer coordination request to the other apparatus for directory services.

According to yet another aspect of the present invention, the step of updating the address mapping list further comprises the step of updating the corresponding relationships among transmission resource identification, transmission resource identification alias, SNPP and SNPP alias.

According to yet another aspect of the present invention, the address mapping list stores transmission resource identification, transmission resource identification alias, SNPP identification and SNPP identification alias and records corresponding relationships among them.

According yet another aspect of the present invention, there provides a method of directory services, comprising the following steps: detecting from outside whether a request for obtaining local configuration information exists; and returning a corresponding result according to the local configuration information when the request for obtaining local configuration information is detected.

In the present invention, the said outside comprises apparatus network element in lower layer and network management in upper layer such as configuration work stations.

Hence, the apparatus and method for directory server can solve the technical problems of being unable to provide and maintain the directory server.

Other characteristics and advantages of the present invention will be described in the following Description, part of which may become obvious from the Description or be understood by carrying out the present invention. The object and other advantages of the present invention can be achieved and obtained through the structures specially pointed out in the Description, claims and accompanying drawings.

### Brief description of the drawings

The figures, used to provide further understanding to the present invention and being a part of the Description serve to explain the present invention along with the embodiments, which does not restrict the present invention. In the figures:
Figure 1 is a block diagram of the apparatus for directory services according to the present invention;
Figure 2 is a schematic view showing the apparatus for directory services component according to the embodiments of the present invention;
Figure 3 is a flow chart of processing a directory services request according to the embodiments of the present invention;
Figure 4 is a flow chart showing the method for directory services according to the present invention;
Figure 5 is a schematic view showing the directory services component according to the embodiments of the present invention receives configuration information;
Figure 6 is another flow chart showing the method for directory services according to the present invention;
Figure 7 is a schematic view showing the directory services component according to the embodiments of the present invention receives configuration information and performs peer coordination with other directory services components;
Figure 8 is a schematic view showing the processing of the directory services component according to the embodiments of the present invention receives peer coordination information of other directory services components;
Figure 9 is a schematic view showing a 4-node ASON according to the embodiments of the present invention; and
Figure 10 is another flow chart of the method for directory services according to the present invention.

### Detailed description of the preferred embodiments

The preferred embodiments of the present invention will be described in combination with the figures as follows. It should be understood that the preferred embodiments here are only used to describe and explain the present invention, not used to restrict the present invention.

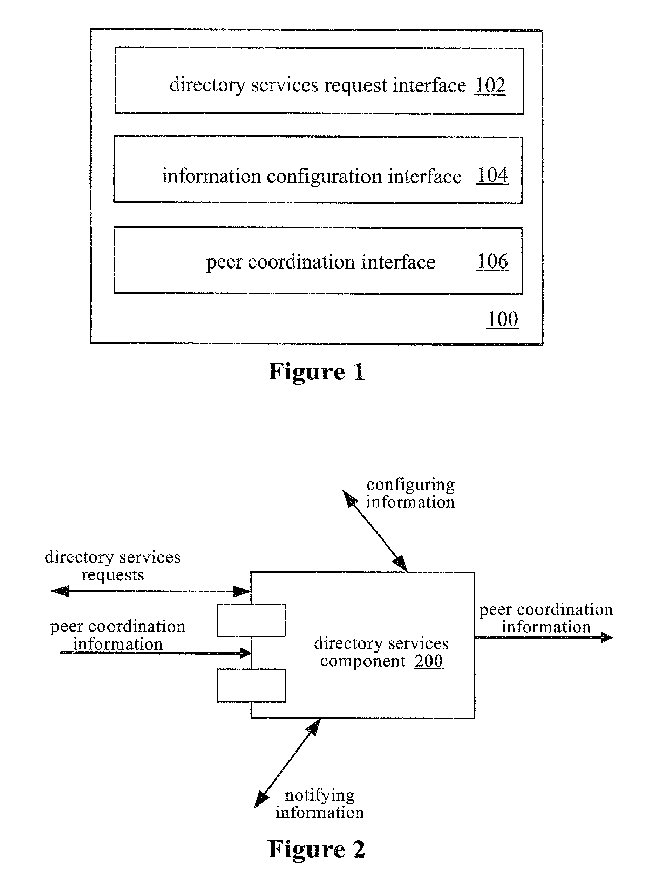

Figure 1 is a block diagram of apparatus for directory services 100 according to the present invention.

As shown in the figure 1, the apparatus for directory services 100 comprises at least one of the following interfaces: directory services request interface 102 for receiving directory services requests from other apparatus for directory service and giving response; information configuration interface 104 for exchanging information with outside and perfecting an address mapping list; and peer coordination interface 106 comprising an input part and an output part for exchanging information with other apparatus for directory service and perfecting the address mapping list.

In present invention, the information configuration interface 104 comprises two interfaces, i.e. a first information configuration interface and a second information configuration interface, which is respectively interact with upper layer and lower layer and perfect the address mapping list. Moreover, the address mapping list stores transmission resource identification, transmission resource identification alias, SNPP identification and SNPP identification alias and records the corresponding relationships among them.

Figure 2 is a schematic view showing an apparatus for directory services component 200 according to the embodiments of the present invention. It can be seen from the figure 2 that the directory services component 200 interacts directory services requests, configuring information, notifying information and peer coordination information with outside.

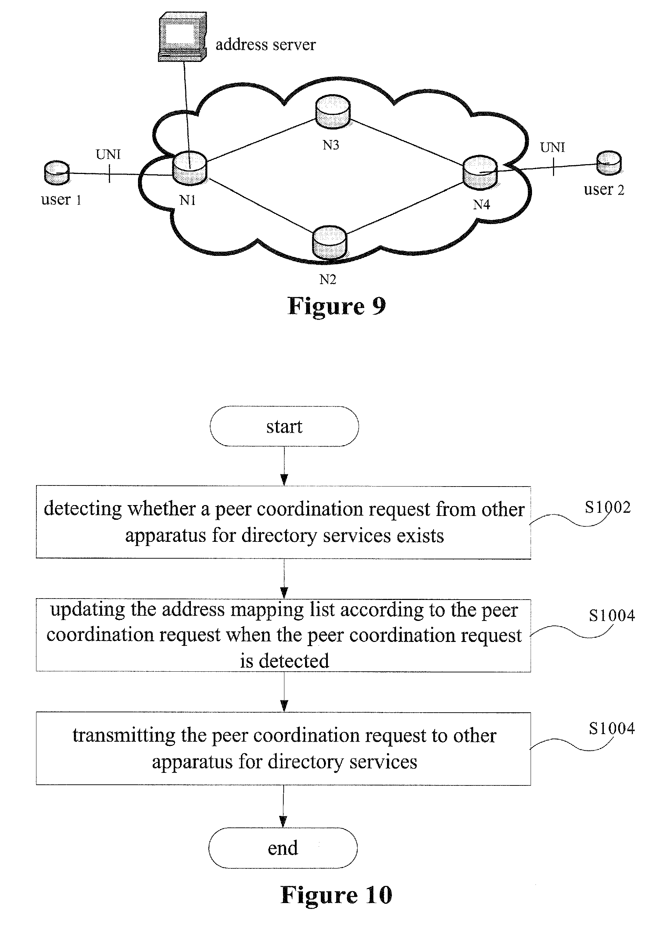

Figure 9 is a schematic view showing a 4-node ASON according to the embodiments of the present invention. As shown in the Figure 9, CallC of N1 network element receives a call request of user 1 and according to the TRI information carried in the request, CallC initiates directory services requests to the directory services component of the N1 network element. In the following text, the present invention will be described in details taking figure 9 as an example and combining other figures.

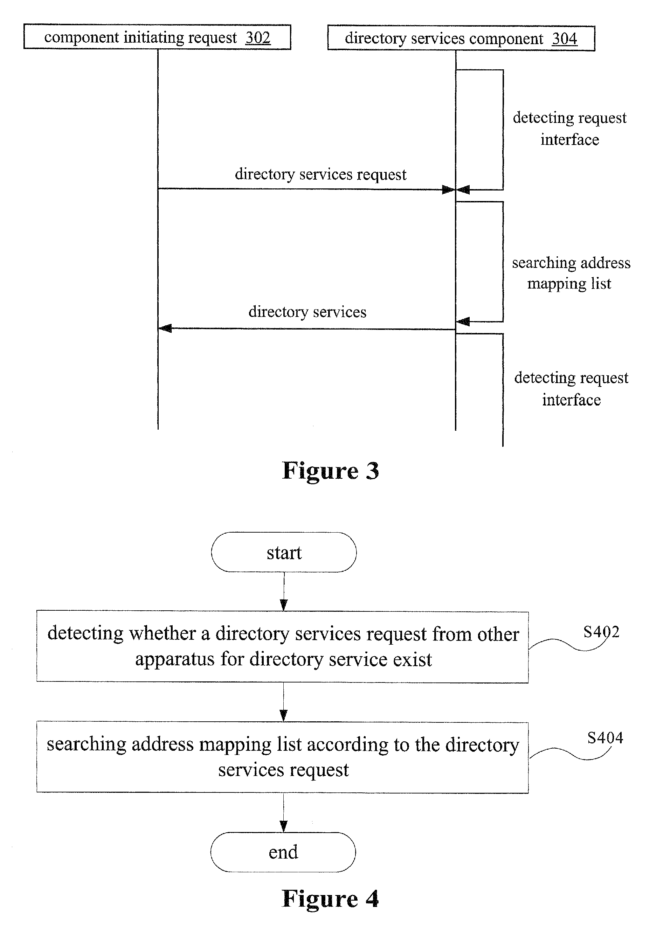

Figure 3 is a flow chart of processing a directory services request according to the embodiments of the present invention. Figure 4 is a flow chart showing the method for directory services according to the present invention.

The method for directory services shown in figure 4 will be described in details taking figure 9 as an example and combining figure 2 and figure 3 as follows. The method for directory services shown in figure 4 comprises the following steps:
Step S402: it is detected whether a directory services request from other apparatus for directory service exits, which corresponding to step 1 in figure 3:
   Step 1, directory services component 304 of N1 checks an interface for providing directory services request and detects a directory request sent by component 302 initiating the directory request.
Step S404, when a directory services request is detected, according to the directory services request, an address mapping list is searched. If an expected result is searched, the expected result is returned to other apparatus for directory services, otherwise failure information is returned. The step S404 is corresponding to step 2 in figure 3:
   Step 2, directory services component 304 of N1 searches the address mapping list according to the TRI information carried in the directory services request. If an expected SNPP identification is searched, the result is returned to component 302 initiating the request.

In the present invention, it needs to be indicated that the information configuration interface comprises two interfaces respectively interacting with upper layer and lower layer, the address mapping list stores the transmission resource identification, the transmission resource identification alias, the SNPP identification and the SNPP identification alias and records the corresponding relationships of among them. The step of updating the address mapping list also comprises the step of updating the corresponding relationships among the transmission resource identification, the transmission resource identification alias, the SNPP and the SNPP alias.

The method for directory services in the present invention comprises the following steps: step S406, it is detected whether configuration information from outside exists; and step S408, when configuration information is detected, the address mapping list is updated according to the configuration information.

Additionally, the method for directory services further comprises the following step: step S410, according to the configuration information, a peer coordination request is created and the peer coordination request is transmitted to other apparatus.

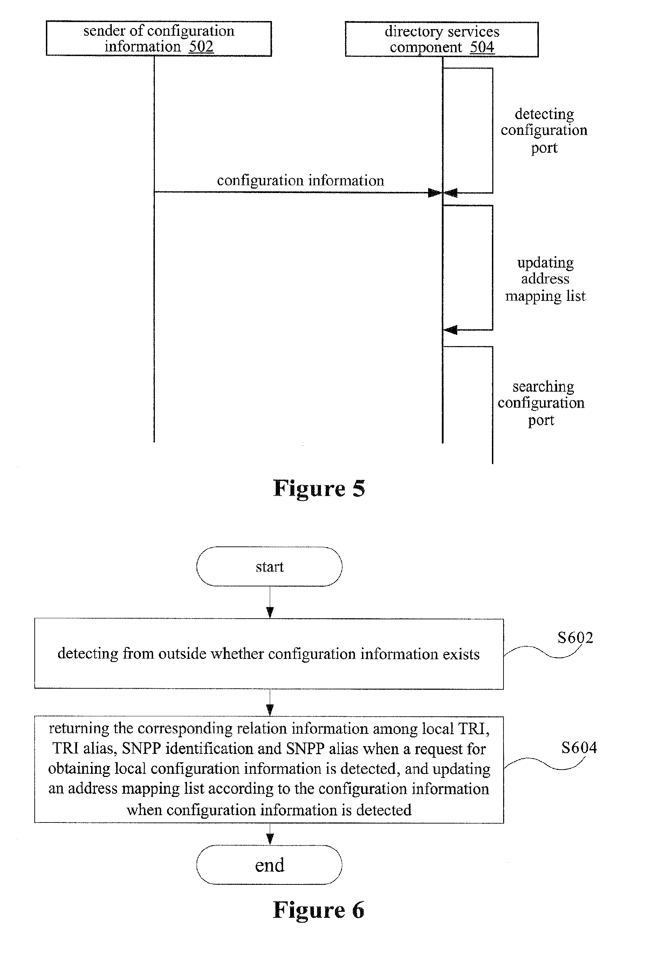

Figure 5 is a schematic view showing the directory services component according to the embodiments of the present invention receives configuration information. Figure 6 is another flow chart of the method for directory services according to the present invention.

The method for directory services shown in figure 6 will be described in details taking figure 9 as an example and combining figures 2 and 5 as follows. The method for directory services shown in figure 6 comprises the following steps:
Step S602, it is detected whether configuration information from outside exists or the request for obtaining local configuration information, which is corresponding to the following step in figure 5:
   Step 1, directory services component 504 of N1 detects the interface for providing information configuration to obtain configuration information sent by an address server (i.e. sender 502 of configuration information) or a request for obtaining local configuration information.
Step S604, when the request for obtaining local configuration information is detected, the corresponding relationships information among local TRI, TRI alias, SNPP identification and SNPP alias is returned; when the configuration information is detected, the address mapping list is updated according to the configuration information. The step S604 is corresponding to the following step in figure 5:
   Step 2, directory services component 504 of N1, according to the sent configuration information, update the address mapping list stored by this network element and the corresponding relationships among TRI, TRI alias, SNPP identification and SNPP alias.

Additionally, the method for directory services further comprises the following step: step S606, a peer coordination request is generated according to the configuration information and the peer coordination request is transmitted to other apparatus.

The outside said in step S602 comprises configuration work stations such as upper layer network management and lower layer device element etc.

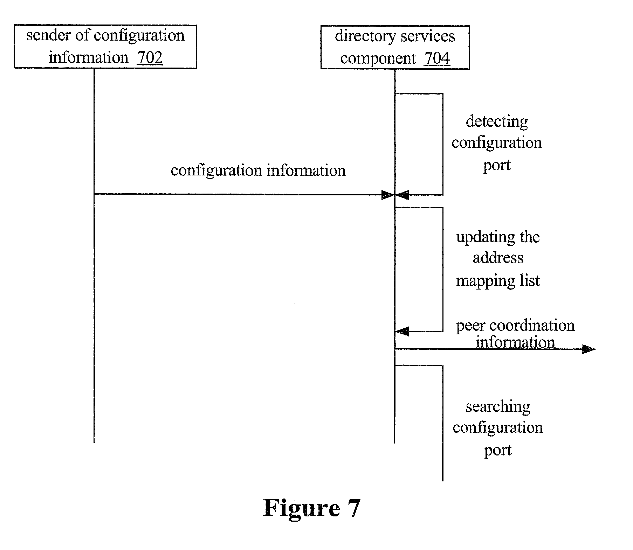

According to the embodiments of the present invention, the methods of directory services shown in figures 4 and 6 both comprise the steps described below. Figure 7 is a schematic view showing the directory services component according to the embodiments of the present invention receives configuration information and performs peer coordination with other directory services components.

Figure 9 is continuing taken as an example to describe other steps in details in combination with figures 2 and 7:
Step S412 or step S608, it is detected whether a peer coordination request from other apparatus for directory services exists, which corresponding to the following steps shown in figure 7 according to the embodiments of the present invention:
   Step 1, directory services component 704 of N1 detects the interface for providing information configuration to obtain configuration information sent by an address server (i.e. sender 702 of configuration information).
      Step S414 or step S610, when a peer coordination request is detected, the address mapping list is updated according to the peer coordination request, which is corresponding to the following steps shown in figure 7:
Step 2, directory services component 704 of N1 updates the address mapping list stored in this network element and the corresponding relationships among TRI, TRI alias, SNPP identification and SNPP alias according to the configuration information sent .
   Step S416 or step S612, a peer coordination request is transmitted to other apparatus for directory services, which is corresponding to the following steps shown in figure 7:
Step 3, directory services component 704 of N1 generates a peer coordination request according to the configuration information and transmits the peer coordination request to directory services components of N2 network element and N3 network element by the output interface of peer coordination.

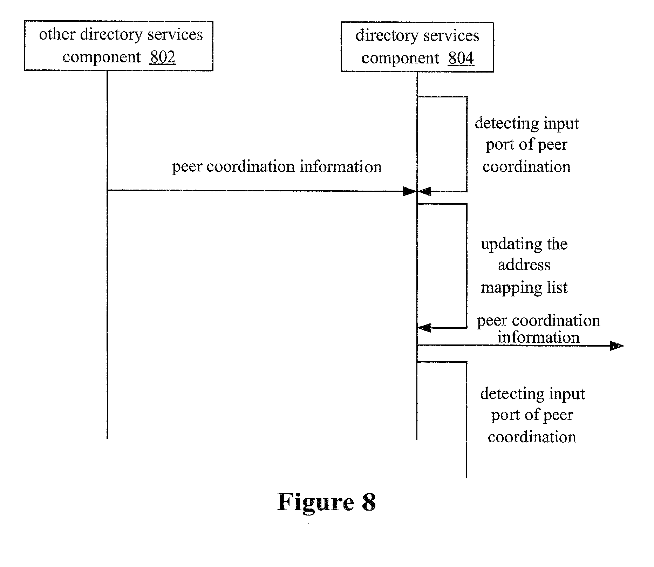

Figure 8 is a schematic view showing the processing of the directory services component according to the embodiments of the present invention receives peer coordination information of other directory services components. Figure 10 is another flow chart of the method for directory services according to the present invention.

Figure 9 is continuing taken as an example to describe the flow shown in figure 10 in details in combination with figure 2 and figure 8. The method for directory services shown in figure 10 comprises the following steps:
Step S1002, it is detected whether a peer coordination request from other apparatus for directory services exists, which is corresponding to the following step shown in figure 8:
   Step 1, directory services component 804 of N2 network element detects input interface of peer coordination to obtain a peer coordination request sent by directory services component 802 of N1 network element.
Step S1004, when a peer coordination request is detected, the address mapping list is updated according to the peer coordination request, which is corresponding to the following step shown in figure 8:
   Step 2, the directory services component 804 of N2 network element updates the address mapping list and the relationships among TRI, TRI alias, SNPP identification and SNPP alias according to the received peer coordination request.
Step S1006, the peer coordination request is transmitted to other apparatus for directory services, which is corresponding to the following steps:
   Step 3, the directory services component 804 of N2 network element continues to transmit a peer coordination request to directory services elements of N3 network element by output interface of peer coordination.

As described above, it can be seen that the present invention achieves the following technical effects:

The apparatus and method for directory services in the present invention completes the processing of directory services requests by providing the directory services request interface, achieves the functions of maintaining and synchronizing directory services information longitudinally and transversely by providing the configuration information interface and the peer coordination interface, and finally solves the technical problems of proving and maintaining directory services in the present ASON network.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of protection of the present invention.

## Claims

1. An apparatus for directory services, wherein, comprising at least one of the following interfaces:
directory services request interface for receiving directory services requests from other apparatus for directory service and giving a response;
information configuration interface for interacting information with outside and perfecting an address mapping list; and
peer coordination interface, comprising an input part and an output part, for exchanging information with other apparatus for directory service and perfecting the address mapping list.

2. The apparatus for directory services according to Claim 1, wherein, the information configuration interface comprising:
a first information configuration interface for interacting information with upper layer and perfecting the address mapping list; and
a second information configuration interface for interacting information with lower layer and perfecting the address mapping list.

3. The apparatus for directory services according to Claim 1 or 2, wherein, the address mapping list stores transmission resource identification, transmission resource identification alias, SNPP identification and SNPP identification alias and records corresponding relationships among them.

4. The apparatus for directory services according to Claim 1 or 2, wherein, the outside comprises: configuration work stations such as upper layer network management and lower layer device elements.

5. A method for directory services, wherein, comprising the following steps:
detecting whether a directory services request from other apparatus for directory service exists; and
searching an address mapping list according to the directory services request when the directory services request is detected; if an expected result is searched, returning the expected result to other apparatus for directory service, otherwise returning failure information.

6. The method for directory services according to Claim 5, wherein, the address mapping list stores transmission resource identification, transmission resource identification alias, SNPP identification and SNPP identification alias and records corresponding relationships among them.

7. The method for directory services according to Claim 5, wherein, further comprising the following steps:
detecting from outside whether configuration information exists or not; and
updating the address mapping list according to the configuration information when it is detected.

8. The method for directory services according to Claim 7, wherein, further comprising the following step:
generating peer coordination request according to the configuration information and
transmitting the peer coordination request to other apparatus for directory service.

9. The methods for directory services according to one of Claims 5 to 8, wherein, further comprising the following steps:
detecting from outside whether a request for obtaining local configuration information exists or not; and
returning a corresponding result according to the request for obtaining the local configuration information when it is detected.

10. The methods for directory services according to one of Claims 5 to 8, wherein, further comprising the following steps:
detecting whether a peer coordination request from other apparatus for directory service exists or not;
updating the address mapping list according to the peer coordination request when the peer coordination request is detected; and
transmitting the peer coordination request to the other apparatus for directory services.

11. The method for directory services according to Claim 7 or 10, wherein, the step of updating the address mapping list further comprising the step of updating the corresponding relationships among the transmission resource identification, the transmission resource identification alias, the SNPP and the SNPP alias.

12. A method for directory services, wherein, comprising the following steps:
detecting whether configuration information from outside exists or not; and
updating an address mapping list according to the configuration information when the configuration information is detected.

13. The method for directory services according to Claim 12, wherein, further comprising the following step:
generating a peer coordination request according to the configuration information and
transmitting the peer coordination request to other apparatus for directory service.

14. The method for directory services according to Claim 12 or 13, wherein, further comprising the following steps:
detecting whether a peer coordination request from other apparatus for directory service exists or not; updating the address mapping list according to the peer coordination request when the peer coordination request is detected; and
transmitting the peer coordination request to the other apparatus for directory service.

15. The method for directory services according to Claim 12 or 14, wherein, the step of updating the address mapping list further comprising the step of updating the corresponding relationships among transmission resource identification, transmission resource identification alias, SNPP and SNPP alias.

16. The method for directory services according to Claim 12, wherein, the address mapping list stores transmission resource identification, transmission resource identification alias, SNPP identification and SNPP identification alias and records corresponding relationships among them.

17. The methods for directory services according to one of Claims 12 to 16, wherein, further comprising the following steps:
detecting from outside whether a request for obtaining local configuration information exists or not; and returning a corresponding result according to the local configuration information when the request for obtaining local configuration information is detected.

18. A method for directory services, wherein, comprising the following steps:
detecting whether a peer coordination request from other apparatus for directory service exists or not;
updating the address mapping list according to the peer coordination request when the peer coordination request is detected; and
transmitting the peer coordination request to the other apparatus for directory service.

19. The method for directory services according to Claim 18, wherein, the step of updating the address mapping list further comprising the step of updating the corresponding relationships among transmission resource identification, transmission resource identification alias, SNPP and SNPP alias.

20. The method for directory services according to Claim 18, wherein, the address mapping list stores transmission resource identification, transmission resource identification alias, SNPP identification and SNPP identification alias and records corresponding relationships among them.

21. The methods for directory services according to one of Claims 18 to 20, wherein, further comprising the following steps:
detecting from outside whether a request for obtaining local configuration information exists or not; and returning a corresponding result according to the local configuration information when the request for obtaining local configuration information is detected.

22. A method for directory services, wherein, comprising the following steps:
detecting from outside whether a request for obtaining local configuration information exists or not; and
returning a corresponding result according to the local configuration information when the request for obtaining local configuration information is detected.

23. The method for directory services according to Claim 22, wherein, further comprising the following steps:
detecting whether a directory services request from other apparatus for directory service exists or not; and
searching an address mapping list according to the directory services request when the directory services request is detected; if an expected result is gotten, returning the expected result to the other apparatus for directory service, otherwise returning failure information.

24. The method for directory services according to Claim 23, wherein, the address mapping list stores transmission resource identification, transmission resource identification alias, SNPP identification and SNPP identification alias and records corresponding relationships among them.

25. The methods for directory services according to one of Claims 22 to 24, wherein, further comprising the following steps:
detecting from outside whether configuration information exists or not; and
updating an address mapping list according to the configuration information when the configuration information is detected.

26. The method for directory services according to Claim 25, wherein, further comprising the following step:
generating a peer coordination request according to the configuration information and
transmitting the peer coordination request to the other apparatus for directory service.

27. The methods for directory services according to one of Claims 22 to 24, wherein, further comprising the following steps:
detecting whether a peer coordination request from other apparatus for directory service exists or not;
updating the address mapping list according to the peer coordination request when the peer coordination request is detected; and
transmitting the peer coordination request to the other apparatus for directory service.

28. The method for directory services according to Claim 25 or 27, wherein, the step of updating the address mapping list further comprising a step of updating corresponding relationships among the transmission resource identification, the transmission resource identification alias, the SNPP and the SNPP alias.

29. The method for directory services according to Claim 22, wherein, the outside comprises: configuration work stations such as upper layer network management and lower layer device elements.
